# DEMANDE DE BREVET EUROPEEN

(11) **EP 4 659 573 A1**
(43) Date de publication de la demande: **10.12.2025**
(21) Numéro de dépôt: 25180481.1
(22) Date de dépôt: 03.06.2025
(51) Int. Cl.: A01K 7/02

(54) **ABREUVOIR POUR ANIMAUX**

(30) Priorité: 04.06.2024 FR 2405843
(71) Demandeur: Polymoule, 72550 Coulans sur Gee (FR)
(72) Inventeur: COSNET, Gilbert, 72210 SOULIGNÉ FLACÉ (FR)
(74) Mandataire: Jacobacci Coralis Harle

(57) **Abrégé**

La présente invention concerne un abreuvoir (1) pour animaux, comprenant une cuve (2), et un couvercle (5) reliés par des moyens de liaison (9) amovibles.

Les moyens de liaison (9) comprennent une tige filetée à œil (91) coopérant avec un écrou de fermeture (92), après passage au travers d'un orifice de passage (13) prolongé par une ouverture latérale (14).

Selon l'invention, l'abreuvoir comprend des moyens de butée (93) agencés pour empêcher l'extraction de ladite tige filetée à œil (91) hors de l'orifice de passage (13), en position dite de serrage de l'écrou de fermeture (92).

De plus, la bordure de couvercle et la bordure de cuve en contact du fait du serrage de l'écrou de fermeture (92), sont structurées pour permettre au couvercle (5) de pivoter sur la cuve (2), dans ladite position de serrage de l'écrou de fermeture (92).

## Description

### Domaine technique de l'invention

La présente invention concerne le domaine général de l'agriculture.

Elle concerne plus particulièrement les abreuvoirs utilisés pour l'alimentation en eau du bétail, et en particulier les abreuvoirs isothermes.

### Etat de la technique

Les abreuvoirs isothermes sont conçus pour mettre à la disposition des animaux une eau dont la température est adaptée aux saisons, et en particulier une température suffisante pour éviter le gel en hiver, et fraîche en été.

Comme décrit dans le document EP-0 753 250, de tels abreuvoirs peuvent comprendre une partie inférieure formant une cuve, et une partie supérieure formant un couvercle, lequel couvercle comprend au moins une ouverture circulaire pour le passage du museau des animaux dans le but de boire l'eau stockée dans la cuve.

L'abreuvoir intègre des moyens d'alimentation en eau ; et chaque ouverture circulaire du couvercle peut être associée à une boule d'obturation escamotable par appui du museau des animaux.

L'abreuvoir comprend encore des moyens adaptés pour relier de manière amovible la cuve et le couvercle, après mise en correspondance de leurs bordures respectives.

De tels abreuvoirs nécessitent des nettoyages fréquents et il est donc intéressant de disposer de moyens de liaison amovibles rapides entre la cuve et le couvercle.

Dans l'abreuvoir du document EP-0 753 250 les moyens de liaison correspondants entre la cuve et le couvercle comprennent des tiges filetées à œil, montées basculantes par rotation de leur œil autour d'un axe pivot solidaire de l'un des éléments parmi la cuve et le couvercle ; la tige filetée coopère avec un écrou de fermeture, après passage au travers d'un orifice de passage ménagé dans l'autre des éléments parmi la cuve et le couvercle.

Cet orifice de passage est prolongé par une ouverture latérale agencée pour permettre à la tige filetée de pénétrer dans l'orifice de passage, et d'en sortir, par un mouvement de basculement autour de son axe pivot.

Dans un premier mode de réalisation, une pluralité de tels moyens de liaison amovibles sont répartis sur tout le pourtour de l'abreuvoir pour permettre un enlèvement complet du couvercle.
Cependant, l'ouverture du couvercle, notamment pour les opérations de nettoyage ou de maintenance, nécessite sa complète désactivation, ce qui prend un certain temps, et ce qui n'est pas toujours facile à réaliser.

Dans un second mode de réalisation possible, les moyens de liaison amovibles en question sont prévus au nombre de deux sur l'un des côtés du couvercle, et le côté opposé est muni d'une structure de charnière.
Mais le sens d'ouverture du couvercle est alors imposé, ce qui peut poser des problèmes en fonction de l'environnement de l'abreuvoir et notamment en cas de présence d'obstacle(s) à proximité, et aussi en fonction du positionnement de l'arrivée d'eau.

### Présentation de l'invention

La présente invention a pour but de proposer une solution technique facilitant les manœuvres d'ouverture et de fermeture du couvercle de tels abreuvoirs, en donnant la possibilité d'enlever complètement le couvercle ou de le configurer en mode « pivotant » ; et, dans ce dernier cas, en permettant de conférer à l'abreuvoir plusieurs sens d'ouverture possibles pour le couvercle associé.

Pour cela, l'abreuvoir pour animaux selon l'invention est du type comprenant une partie inférieure formant une cuve dont l'ouverture supérieure est délimitée par une bordure de cuve, et d'une partie supérieure formant un couvercle, délimitée par une bordure de couvercle,
lequel couvercle comprend au moins une ouverture pour le passage du museau des animaux dans le but de boire de l'eau stockée dans ladite cuve,
la bordure de couvercle étant destinée à venir en correspondance avec la bordure de cuve pour fermer l'ouverture supérieure de cette dernière,
ladite cuve et ledit couvercle étant reliés par des moyens de liaison amovibles,
certains au moins desdits moyens de liaison comprenant une tige filetée à œil, montée basculante par rotation de son œil autour d'un axe pivot et solidaire de l'un des éléments parmi la cuve et le couvercle,
laquelle tige filetée coopère avec un écrou de fermeture après passage au travers d'un orifice de passage ménagé dans l'autre des éléments parmi la cuve et le couvercle,
lequel orifice de passage est délimité - par une bordure d'appui contre laquelle vient prendre appui ledit écrou de fermeture, et - par une bordure opposée, dite bordure d'entrée de tige,
lequel orifice de passage est prolongé par une ouverture latérale agencée pour permettre à ladite tige filetée de pénétrer dans ledit orifice de passage, et d'en sortir, par un mouvement de basculement autour dudit axe pivot,
et conformément à l'invention, l'abreuvoir comprend des moyens de butée agencés pour empêcher l'extraction de ladite tige filetée hors de l'orifice de passage du couvercle, et par l'ouverture latérale, en position dite de serrage de l'écrou de fermeture,
et la bordure de couvercle ainsi que la bordure de cuve, en contact du fait du serrage de l'écrou de fermeture, sont structurées pour permettre au couvercle de pivoter sur la cuve, autour de l'axe pivot, dans ladite position de serrage dudit écrou de fermeture.

Une telle structure permet l'obtention d'un abreuvoir comprenant une cuve et un couvercle :
- dont le couvercle peut être maintenu pivotant sur la cuve (par un système de charnière), et aussi,
- dont le couvercle et la cuve peuvent être totalement séparés l'un de l'autre.

D'autres caractéristiques non limitatives et avantageuses de l'abreuvoir conforme à l'invention, prises individuellement ou selon toutes les combinaisons techniquement possibles, sont les suivantes :
- les moyens de butée peuvent comprendre :
   (a) un logement d'orifice ménagé au niveau de la bordure d'entrée de tige de l'orifice de passage, et
   (b) un organe de butée, ménagé sur ladite tige filetée à œil et complémentaire dudit logement d'orifice, lequel organe de butée est agencé pour pénétrer dans ledit logement d'orifice lors du vissage dudit écrou de fermeture sur ladite tige filetée à œil, bloquant ainsi ladite tige filetée à œil par rapport au couvercle, en position dite de serrage dudit écrou de fermeture ;
- les moyens de butée peuvent comprendre :
   (a) un logement d'écrou ménagé au niveau de la bordure d'appui de l'orifice de passage, et
   (b) l'écrou de fermeture, complémentaire dudit logement d'écrou, lequel écrou de fermeture est agencé pour pénétrer dans le logement d'écrou lors de son vissage sur la tige filetée à œil, assurant ainsi le blocage de la tige filetée à œil par rapport au couvercle, en position dite de serrage de l'écrou de fermeture ;
- pour conférer un choix du sens d'ouverture du couvercle : l'abreuvoir comprend deux côtés en opposition qui s'étendent parallèlement l'un par rapport à l'autre, et les moyens de liaison amovibles sont au nombre d'au moins deux sur chacun desdits deux côtés en opposition ;
- l'axe pivot est solidaire de la cuve et l'orifice de passage est ménagé dans le couvercle ;
- l'écrou de fermeture est un écrou de type écrou papillon ou bouton de serrage, à vissage/dévissage manuel (sans nécessiter d'outil) ;
- l'organe de butée est en forme de pastille circulaire s'étendant dans un plan perpendiculaire à l'axe de ladite tige filetée à œil, et le logement d'orifice a une forme circulaire complémentaire ;
- la bordure de couvercle et/ou la bordure de cuve comprend une structure de joint écrasable périphérique, laquelle structure de joint est dans une configuration écrasée en position dite de serrage desdits écrous ;
- la bordure de couvercle et la bordure de cuve comprennent chacune une structure de joint écrasable périphérique, lesquelles structures de joint périphériques desdites bordures de couvercle et de cuve sont décalées latéralement l'une par rapport à l'autre, et lesquelles structures de joint sont dans une configuration écrasée en position dite de serrage des écrous ;
- l'axe pivot est monté dans une chambre d'accueil, avec ses deux extrémités logées dans des orifices latéraux de chambre,

l'axe pivot dispose d'une possibilité de mouvement axial,
et l'abreuvoir comprend des moyens amovibles de verrouillage du mouvement axial de l'axe pivot ;
   - l'une des extrémités de l'axe pivot comprend un prolongement axial qui s'étend au sein d'une chambre latérale accessible depuis l'extérieur et délimitée par deux parois, une première paroi de chambre traversée par ledit prolongement axial, et une seconde paroi de chambre disposée en regard,
les moyens amovibles de verrouillage du mouvement axial dudit axe pivot étant constitués :
   (a) par l'extrémité libre dudit prolongement axial qui vient en butée contre ladite seconde paroi de chambre, et
   (b) par une goupille amovible conçue pour pouvoir être introduite dans un orifice de réception ménagé dans ledit prolongement axial, et pour constituer alors une butée coopérant avec ladite première paroi de chambre.

Bien entendu, les différentes caractéristiques, variantes et formes de réalisation de l'invention peuvent être associées les unes avec les autres selon diverses combinaisons dans la mesure où elles ne sont pas incompatibles ou exclusives les unes des autres.

### Description détaillée de l'invention

De plus, diverses autres caractéristiques de l'invention ressortent de la description annexée effectuée en référence aux dessins qui illustrent une forme, non limitative, de réalisation de l'invention et où :
La figure 1 est une vue en perspective d'une forme de réalisation possible d'un abreuvoir pour animaux conforme à l'invention, ici avec son couvercle en position fermée sur la cuve ;
La figure 2 est une vue en perspective de l'abreuvoir illustré sur la figure 1, ici avec son couvercle en position ouverte, par pivotement sur l'un de ses côtés ;
La figure 3 est encore une vue en perspective de l'abreuvoir illustré sur la figure 1, ici avec son couvercle en position ouverte, par pivotement sur un autre de ses côtés ;
La figure 4 est une vue agrandie, en perspective, qui détaille l'un des moyens de liaison entre la cuve et le couvercle de l'abreuvoir illustré sur les figures 1 à 3 ;
La figure 5 est une vue en coupe du moyen de liaison entre la cuve et le couvercle ;
La figure 6 est une vue en perspective de la tige filetée à œil constitutive des moyens de liaison des figures 4 et 5, représentée de manière isolée avec l'écrou associé.

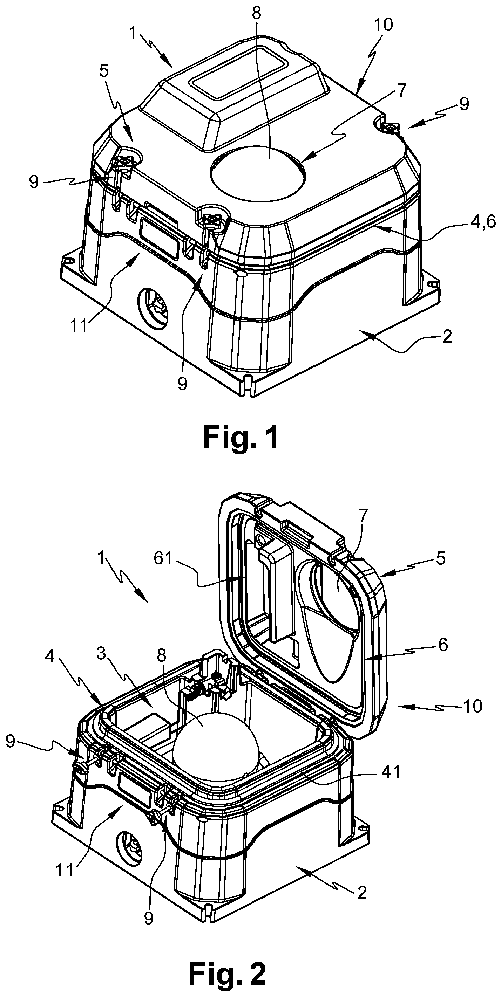

L'abreuvoir 1 pour animaux illustré sur les figures 1 à 3 a une forme générale parallélépipédique de section horizontale carrée ou rectangulaire.

Cet abreuvoir 1 comprend une partie inférieure formant une cuve 2 dont l'ouverture supérieure 3 est délimitée par une bordure de cuve 4, et d'une partie supérieure formant couvercle 5, délimité par une bordure de couvercle 6.

Le volume interne de la cuve 2 intègre des moyens d'alimentation en eau, non représentés.

Le couvercle 5 comprend une ouverture 7 pour le passage du museau des animaux dans le but de boire de l'eau stockée dans la cuve 2.
Dans des variantes de réalisation, le couvercle 5 peut comprendre plusieurs ouvertures 7.

De manière classique, l'ouverture 7 du couvercle 5 est associée à une boule d'obturation 8, interne, qui vient la fermer en présence d'un niveau d'eau suffisant dans la cuve 2, et que les animaux peuvent escamoter par appui de leur museau quand ils veulent s'abreuver.

La bordure de couvercle 6 est destinée à venir en correspondance avec la bordure de cuve 4 pour fermer l'abreuvoir 1, comme illustré sur la figure 1.

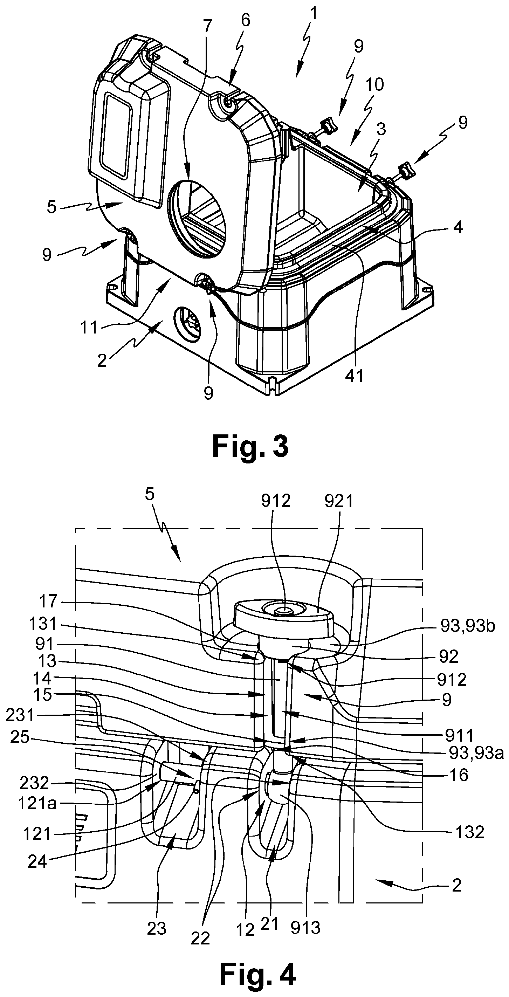

L'abreuvoir 1 comprend encore des moyens de liaison 9 amovibles (détaillés sur les figures 4 à 6), disposés sur son pourtour, pour verrouiller le couvercle 5 sur la cuve 2.

Au moins un moyen de liaison 9 est prévu sur deux côtés en opposition 10, 11 de l'abreuvoir qui s'étendent parallèlement l'un par rapport à l'autre.

Plus particulièrement, au moins deux moyens de liaison 9 sont prévus sur les deux côtés en opposition 10, 11 de l'abreuvoir qui s'étendent parallèlement l'un par rapport à l'autre.
Ici, aucun moyen de liaison 9 n'est prévu sur les deux autres côtés de l'abreuvoir 1.

Chaque moyens de liaison 9 comprend une tige à œil 91, montée basculante par rotation de son œil autour d'un axe pivot 12 ici solidaire de la cuve 2 ; et cette tige à œil 91 coopère avec un écrou 92 de fermeture, après passage au travers d'un orifice de passage 13 ménagé dans le couvercle 5.

La tige à œil 91 comprend une tige filetée 911 dont une extrémité est munie d'un filetage 912 pour coopérer avec l'écrou 92 associé, et dont l'autre extrémité est munie d'un œil (ou anneau ou bague) 913.

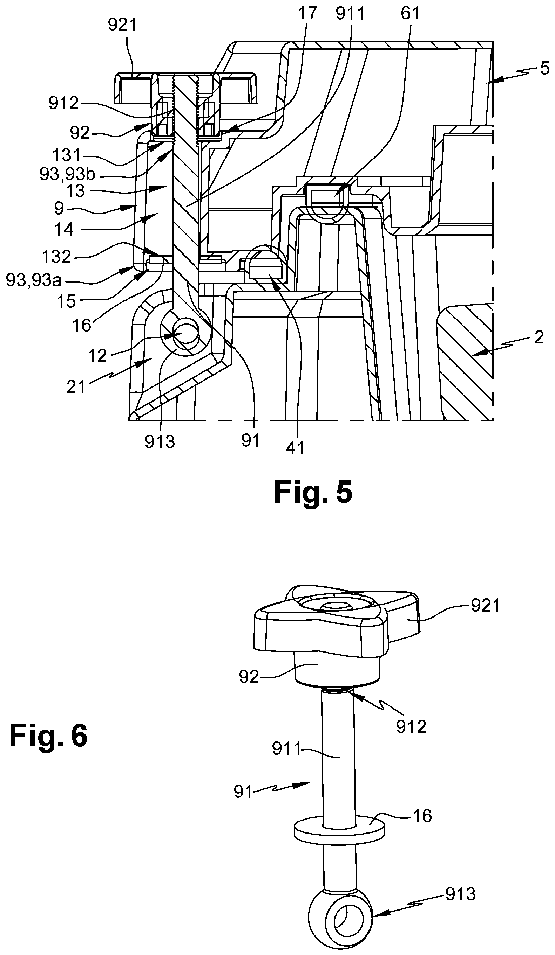

Comme on peut le voir sur les figures 4 et 5, l'orifice de passage 13, ménagé ici dans le couvercle 5, est délimité - par une bordure d'appui 131 contre laquelle vient prendre appui l'écrou 92, et - par une bordure opposée 132, dite bordure d'entrée de tige 132.

Entre la bordure d'appui 131 et la bordure d'entrée de tige 132, l'orifice de passage 13 est prolongé par une ouverture latérale 14 agencée pour permettre à la tige filetée 911 de pénétrer dans l'orifice de passage 13, et d'en sortir, par un mouvement de basculement autour de l'axe pivot 12, pour les opérations d'ouverture et de fermeture du couvercle 5.

Conformément à l'invention l'abreuvoir 1 comprend des moyens de butée 93 agencés pour empêcher l'extraction de la tige filetée 911 hors de l'orifice de passage 13 du couvercle 5, en position dite de serrage de l'écrou de fermeture 92, et en particulier pour empêcher cette extraction perpendiculairement à l'axe de la tige filetée 911, par l'ouverture latérale 14.

Ces moyens de butée 93 peuvent être ménagés au niveau de l'une ou des deux extrémités de l'orifice de passage 13.

Plus particulièrement, ces moyens de butée 93 peuvent être ménagés au niveau de l'extrémité de l'orifice de passage 13 qui est située à proximité de l'axe pivot 12, et de préférence aussi au niveau de l'autre extrémité de l'orifice de passage 13.

Dans l'exemple de réalisation illustré sur les figures annexées, des moyens de butée 93a sont prévus au niveau de l'extrémité inférieure de l'orifice de passage 13 (en particulier au niveau de la bordure d'entrée de tige 132 de l'orifice de passage 13), et des moyens de butée 93b sont prévus au niveau de l'extrémité supérieure de l'orifice de passage 13 (en particulier au niveau de la bordure d'appui 131 de l'orifice de passage 13).

### Moyens de butée 93a :

Comme on peut le voir sur les figures 4 et 5, la bordure d'entrée de tige 132 de l'orifice de passage 13 comprend un logement d'orifice 15, et la tige filetée 911 comprend un organe de butée 16, complémentaire de ce logement d'orifice 15, lequel organe de butée 16 est agencé pour pénétrer dans le logement d'orifice 15 lors du vissage de l'écrou de fermeture 92 sur ladite tige filetée 911, bloquant ainsi ladite tige filetée 911 par rapport au couvercle 5, en position dite de serrage de l'écrou de fermeture 92.

### Moyens de butée 93b :

Toujours sur les figures 4 et 5, la bordure d'appui 131 de l'orifice de passage 13 comprend un logement d'écrou 17, complémentaire de l'écrou de fermeture 92 ; et cet écrou de fermeture 92 est agencé pour pénétrer dans le logement d'écrou 17 lors de son vissage sur la tige filetée 911, renforçant ainsi le blocage la tige filetée 911 par rapport au couvercle 5, en position dite de serrage de l'écrou de fermeture 92

### On obtient ainsi un blocage efficace de la tige filetée 911 aux deux extrémités de l'orifice de passage 13, lorsque l'écrou de fermeture 92 est serré.

Dans une variante de réalisation, seuls les moyens de butée 93a ménagés au niveau de la bordure d'entrée de tige 132 de l'orifice de passage 13 peuvent être prévus.
Mais la présence des moyens de butée 93b ménagés au niveau de la bordure d'appui 131 de l'orifice de passage 13 reste préférable.

La bordure de couvercle 6 et la bordure de cuve 4, en contact du fait du serrage de l'écrou de fermeture 92, sont structurées pour permettre au couvercle 5 de pivoter sur la cuve 2, autour de l'axe pivot 12, dans ladite position de serrage de l'écrou de fermeture 92.
En particulier, on prévoit des pentes, des dépouilles ou des espacements suffisants entre les bordures en regard 4, 6 de la cuve 2 et du couvercle 5 pour ne pas gêner les manœuvres de pivotement du couvercle 5 autour de son axe pivot 12.

On comprend alors :
- que le couvercle 5 peut-être verrouillé sur la cuve 2 lorsque tous les moyens de liaison 9 sont activés, avec les écrous de fermeture 92 dans la position de serrage ;
- que le couvercle 5 peut-être complètement séparé de la cuve 2 lorsque tous les moyens de liaison 9 sont désactivés, avec les écrous de fermeture 92 dans la position desserrée ; et aussi
- que le couvercle 5 peut être maintenu pivotant sur la cuve 2, cela lorsque tous les moyens de liaison 9 de l'un des deux côtés en opposition 10, 11 sont désactivés, alors que les moyens de liaison 9 de l'autre des deux côtés en opposition 10, 11 restent activés.

Les moyens de liaison 9 qui restent activés constituent un système de charnière autorisant le pivotement correspondant du couvercle 5, en ouverture et en fermeture, cela en relation avec le ou les systèmes de butées 93 et avec la conformation adaptée des bordures de cuve 2 et de couvercle 5 en contact.

Les opérations d'ouverture et de fermeture du couvercle 5 sont alors particulièrement simplifiées du fait que tous les moyens de liaison 9 n'ont pas besoin d'être activés/désactivés.

A noter également que l'ouverture du couvercle 5 peut être réalisée au choix de l'opérateur, sur le côté 10 ou sur le côté 11 de l'abreuvoir, le côté opposé formant charnière, cela par exemple en fonction du positionnement de l'abreuvoir sur le site et de la facilité d'accès à l'un ou l'autre de ses côtés 10 ou 11.

Dans une variante de réalisation, les moyens de maintien 9 peuvent être inversés sur la cuve 2 et le couvercle 5, c'est-à-dire que les axes pivots 12 peuvent être prévus solidaire du couvercle 5, avec les tiges filetées à œil 91 qui viennent se verrouiller sur la cuve 2 munie des orifices de passage 13, par l'intermédiaire des écrous de fermeture 92.

L'écrou de fermeture 92 présente ici une forme cylindrique qui coopère avec un logement d'écrou 17 de forme circulaire complémentaire.

L'écrou de fermeture 92 est un écrou du type à vissage/dévissage manuel, rapide. Pour cela cet écrou de fermeture 92 peut comprendre une extension supérieure 921 adaptée à la prise en mains (par exemple adaptée pour obtenir un écrou de type papillon ou bouton de serrage).
Deux variantes d'extensions supérieures 921 sont illustrées sur les figures annexées, l'une notamment sur la figure 4 comprenant deux extensions latérales, et l'autre notamment sur la figure 6 comprenant quatre extensions latérales.

L'organe de butée 16 peut être de toute forme adaptée, réalisé monobloc avec la tige filetée 911 ou rapportée et fixée sur cette dernière par exemple par soudage.

L'organe de butée 16 peut être sphérique, en forme de portion de sphère, de forme plane polyédrique ou circulaire, ou autre.

Dans le mode de réalisation illustré, l'organe de butée 16 est en forme de pastille ou de rondelle circulaire s'étendant dans un plan perpendiculaire à l'axe de ladite tige filetée 911, rapporté et fixé par soudage.

Le logement d'orifice 15 ménagé dans le couvercle 5 a une forme complémentaire à celle de l'organe de butée 16, ici une forme circulaire.

Le dévissage de l'écrou de fermeture 92 désactive les moyens de butée 93b par extraction hors du logement d'écrou 17. Et la séparation du couvercle 5 par rapport à la cuve 2 désactive les moyens de butée 93a par extraction de l'organe de butée 16 hors du logement d'orifice 15.

Comme on peut le voir sur la figure 4, en particulier, l'axe pivot 12 des moyens de liaison 9 est monté dans une chambre d'accueil 21 du couvercle 2, avec ses deux extrémités logées dans des orifices latéraux de chambre 22.

Cet axe pivot 12 dispose d'une possibilité de mouvement axial, et il est prévu des moyens amovibles de verrouillage de ce mouvement axial.

Plus précisément, toujours comme illustré sur la figure 4, l'une des extrémités de l'axe pivot 12 comprend un prolongement axial 121 qui s'étend au sein d'une chambre latérale 23 de la cuve 2, accessible depuis l'extérieur et délimitée par deux parois : une première paroi de chambre 231 traversée par ledit prolongement axial, 121 et une seconde paroi de chambre 232 disposée en regard.

Les moyens amovibles de verrouillage du mouvement axial de l'axe pivot 12 sont ici constitués :
- par l'extrémité libre 121a du prolongement axial 121 qui vient en butée contre la seconde paroi de chambre 232, et
- par une goupille 24, amovible, conçue pour pouvoir être introduite dans un orifice de réception 25 ménagé dans ledit prolongement axial 121, et pour constituer alors une butée coopérant avec la première paroi de chambre 231.

On comprend que la goupille 24 verrouille le mouvement axial de l'axe pivot 12, et que son enlèvement de l'orifice 25 autorise le mouvement axial de l'axe pivot 12 et le démontage de la tige filetée à œil 91.

L'abreuvoir 1 comprend encore un système de joint(s) entre la cuve 2 et le couvercle 5 pour assurer l'étanchéité en position de couvercle 5 fermé.

Ainsi, la bordure de couvercle 6 et/ou la bordure de cuve 4 comprend une structure de joint écrasable périphérique, laquelle structure de joint est dans une configuration écrasée en position de serrage des écrous de fermeture 92.

Dans une forme de réalisation préférée, la bordure de couvercle 6 et la bordure de cuve 4 comprennent chacune une structure de joint écrasable périphérique, respectivement 61 et 41, qui sont décalées latéralement l'une par rapport à l'autre, et lesquelles structures de joint 61, 41 sont dans une configuration écrasée en position de serrage des écrous de fermeture 92.

## Revendications

1. Abreuvoir (1) pour animaux, du type comprenant une partie inférieure formant une cuve (2) dont l'ouverture supérieure (3) est délimitée par une bordure de cuve (4), et une partie supérieure formant couvercle (5), délimitée par une bordure de couvercle (6),
lequel couvercle (5) comprend au moins une ouverture (7) pour le passage du museau des animaux dans le but de boire de l'eau stockée dans ladite cuve (2),
la bordure de couvercle (4) étant destinée à venir en correspondance avec la bordure de cuve (6) pour fermer l'ouverture supérieure (3) de cette dernière,
ladite cuve (2) et ledit couvercle (5) étant reliés par des moyens de liaison (9) amovibles,
certains au moins desdits moyens de liaison (9) comprenant une tige filetée à œil (91), montée basculante par rotation de son œil (913) autour d'un axe pivot (12) solidaire de l'un des éléments parmi la cuve (2) et le couvercle (5),
laquelle tige filetée à œil (91) coopère avec un écrou de fermeture (92) après passage au travers d'un orifice de passage (13) ménagé dans l'autre des éléments parmi la cuve (2) et le couvercle (5),
lequel orifice de passage (13) est délimité - par une bordure d'appui (131) contre laquelle vient prendre appui ledit écrou de fermeture (92), et - par une bordure opposée, dite bordure d'entrée de tige (132),
lequel orifice de passage (13) est prolongé par une ouverture latérale (14) agencée pour permettre à ladite tige filetée à œil (91) de pénétrer dans ledit orifice de passage (13), et d'en sortir, par un mouvement de basculement autour dudit axe pivot (12),
**caractérisé en ce qu'**il comprend des moyens de butée (93 ; 93a, 93b) agencés pour empêcher l'extraction de ladite tige filetée à œil (91) hors de l'orifice de passage (13) du couvercle (5), et par l'ouverture latérale (14), en position dite de serrage dudit écrou de fermeture (92),
la bordure de couvercle (6) et la bordure de cuve (4) en contact du fait du serrage dudit écrou de fermeture (92), étant structurées pour permettre audit couvercle (5) de pivoter sur ladite cuve (2), autour dudit axe pivot (12), dans ladite position de serrage dudit écrou de fermeture (92).

2. Abreuvoir (1) selon la revendications 1, **caractérisé en ce que** lesdits moyens de butée (93a) comprennent :
- un logement d'orifice (15) ménagé au niveau de la bordure d'entrée de tige (132) de l'orifice de passage (13), et
- un organe de butée (16), ménagé sur ladite tige filetée à œil (91) et complémentaire dudit logement d'orifice (15), lequel organe de butée (16) est agencé pour pénétrer dans ledit logement d'orifice (15) lors du vissage dudit écrou de fermeture (92) sur ladite tige filetée à œil (91), bloquant ainsi ladite tige filetée à œil (91) par rapport au couvercle (5), en position dite de serrage dudit écrou de fermeture (92).

3. Abreuvoir (1) selon la revendication 2, **caractérisé en ce que** lesdits moyens de butée (93b) comprennent :
- un logement d'écrou (17) ménagé au niveau de la bordure d'appui (131) de l'orifice de passage (13), et
- l'écrou de fermeture (92), complémentaire dudit logement d'écrou (17), lequel écrou de fermeture (92) est agencé pour pénétrer dans le logement d'écrou (17) lors de son vissage sur la tige filetée (911), assurant ainsi le blocage de la tige filetée à œil (91) par rapport au couvercle (5), en position dite de serrage de l'écrou de fermeture (92).

4. Abreuvoir (1) selon l'une quelconque des revendications 1 à 3, **caractérisé en ce qu'**il comprend deux côtés en opposition (10, 11) qui s'étendent parallèlement l'un par rapport à l'autre,
lesdits moyens de liaison (9) amovibles étant au nombre d'au moins deux sur chacun desdits deux côtés en opposition (10, 11).

5. Abreuvoir (1) selon l'une quelconque des revendications 1 à 4, **caractérisé en ce que** ledit axe pivot (12) est solidaire de la cuve (2) et ledit orifice de passage (13) est ménagé dans ledit couvercle (5).

6. Abreuvoir (1) selon l'une quelconque des revendications 1 à 5, **caractérisé en ce que** ledit écrou de fermeture (92) est un écrou de type écrou papillon ou bouton de serrage, à vissage/dévissage manuel.

7. Abreuvoir (1) selon l'une quelconque des revendications 2 ou 3, **caractérisé en ce que** ledit organe de butée (16) est en forme de pastille circulaire s'étendant dans un plan perpendiculaire à l'axe de ladite tige filetée à œil (91),
ledit logement d'orifice (15) ayant une forme circulaire complémentaire.

8. Abreuvoir (1) selon l'une quelconque des revendications 1 à 7, **caractérisé en ce que** ladite bordure de couvercle (6) et/ou ladite bordure de cuve (4) comprennent une structure de joint écrasable périphérique (41, 61), laquelle structure de joint (41, 61) est dans une configuration écrasée en position dite de serrage desdits écrous de fermeture (92).

9. Abreuvoir (1) selon la revendication 8, **caractérisé en ce que** ladite bordure de couvercle (6) et ladite bordure de cuve (4) comprennent chacune une structure de joint (41, 61) écrasable périphérique, lesquelles structures de joint (41, 61) périphériques desdites bordures de couvercle (6) et de cuve (4) sont décalées latéralement l'une par rapport à l'autre, et lesquelles structures de joint (41, 61) sont dans une configuration écrasée en position dite de serrage desdits écrous de fermeture (92).

10. Abreuvoir (1) selon l'une quelconque des revendications 1 à 9, **caractérisé en ce que** ledit axe pivot (12) est monté dans une chambre d'accueil (21), avec ses deux extrémités logées dans des orifices latéraux de chambre (22),
**en ce que** ledit axe pivot (12) dispose d'une possibilité de mouvement axial,
et **en ce que** ledit abreuvoir (1) comprend des moyens amovibles de verrouillage (121, 24) du mouvement axial dudit axe pivot (12).

11. Abreuvoir (1) selon la revendication 10, **caractérisé en ce que** l'une des extrémités dudit axe pivot (12) comprend un prolongement axial (121) qui s'étend au sein d'une chambre latérale (23) accessible depuis l'extérieur et délimitée par deux parois (231, 232), une première paroi (231) de chambre traversée par ledit prolongement axial (121), et une seconde paroi (232) de chambre disposée en regard,
les moyens amovibles de verrouillage du mouvement axial dudit axe pivot (12) étant constitués :
- par l'extrémité libre dudit prolongement axial (121) qui vient en butée contre ladite seconde paroi de chambre (232), et
- par une goupille amovible (24) conçue pour pouvoir être introduite dans un orifice de réception (25) ménagé dans ledit prolongement axial (121), et pour constituer alors une butée coopérant avec ladite première paroi de chambre (231).
